# EUROPEAN PATENT APPLICATION

(11) **EP 3 806 263 A1**
(43) Date of publication of application: **14.04.2021**
(21) Application number: 19811157.7
(22) Date of filing: 21.02.2019
(51) Int. Cl.: H02J 3/36

(54) **HYBRID DIRECT CURRENT CONVERTER VALVE GROUP ONLINE FEED CIRCUIT AND FEED METHOD AND APPARATUS**

(30) Priority: 28.05.2018 CN 201810519362
(71) Applicant: NR Electric Co., Ltd., Nanjing, Jiangsu 211102 (CN); NR Engineering Co., Ltd., Nanjing, Jiangsu 211102 (CN)
(72) Inventor: LU, Dongbin, Nanjing, Jiangsu 211102 (CN); LI, Haiying, Nanjing, Jiangsu 211102 (CN); CHEN, Songlin, Nanjing, Jiangsu 211102 (CN); ZOU, Qiang, Nanjing, Jiangsu 211102 (CN)
(74) Representative: Grünecker Patent- und Rechtsanwälte PartG mbB
(86) International application number: PCT/CN2019/075673
(87) International publication number: WO 2019/227979

(57) **Abstract**

The present invention discloses a hybrid DC converter valve group online entry circuit for online entering a voltage source converter of a hybrid DC converter, at least including: a valve group connecting line switch of a voltage source-type valve group unit, a DC bus switch of the voltage source-type valve group unit, a bypass switch of the voltage source-type valve group unit, and a bypass switch of a current source-type valve group unit; or at least including: a valve group connecting line switch of a voltage source-type valve group unit, a neutral bus switch of the voltage source-type valve group unit, a bypass switch of the voltage source-type valve group unit, and a bypass switch of a current source-type valve group unit. The present invention also discloses a hybrid DC converter valve group online entry method and apparatus. The method includes: first deblocking a voltage source converter; connecting the voltage source converter in parallel to two ends of a line commutated converter; blocking the line commutated converter; connecting the line commutated converter in series to the voltage source converter; and online entering the line commutated converter.

## Description

### Technical Field

The present invention relates to the field of hybrid High Voltage Direct Current (HVDC) transmission employing Voltage-Source Converters (VSCs) and HVDC transmission employing Line Commutated Converters (LCCs), and in particular, to a hybrid DC converter valve group online entry circuit, method and apparatus.

### Background

Thyristor-based current source type HVDC transmission has the advantages that the converter loss is small, and the DC system can be restarted by means of phase shift when a DC line has a fault, and has the disadvantages that a converter on the inverter side works in active inversion and cannot be connected to a passive system; commutation failure is prone to occur if disturbance exists in the inverter side after accessing a weak AC system; and the reactive power consumption is high, the voltage and current harmonic content is high, and it is necessary to install a filter apparatus to provide reactive power and filtering. Voltage Source Converter based High Voltage Direct Current (VSC-HVDC) transmission has the advantages that the controllability is high, the passive system can be accessed, and no reactive power compensation apparatus is needed, and has the disadvantages that the converter has large switching loss, and the modular multi-level converter with a half-bridge structure cannot control the fault current when the DC side has a fault, and after the fault occurs, the fault can only be removed by turning off a circuit breaker at the AC side.

For the fault at the DC side, ABB company solves it by using a DC circuit breaker with additional DC lines, but the DC circuit breaker is high in cost, and the reliability needs to be verified; Siemens AG solves it by using the modular multi-level converter with a full-bridge circuit structure, but the converter of the full-bridge circuit structure is high in loss; Alstom solves it by using a full-bridge circuit and connecting a bridge arm in series to a power electronic switch device, but the reliability needs to be verified; Zhejiang University solves it by connecting a diode in series to a main loop, but the diode does not participate in power conversion, which causes loss; and NR Electric Co., Ltd. uses a hybrid DC converter with a bypass branch in which a line commutated converter and the voltage source converter are connected in series, the voltage source converter only adopts the modular multi-level converter with a half-bridge circuit structure, the line commutated converter can naturally block the fault current at the DC side, and the bypass branch can reliably protect the voltage source converter, but the DC voltage adjustment range of the voltage source converter of the hybrid DC converter is limited. Unlike the line commutated converter, the voltage source converter cannot adjust the voltage to zero to achieve online entry. If the voltage source converter is withdrawn due to failure or maintenance, the hybrid DC converter needs to be stop or put into operation again only when the DC current is controlled to zero, which affects the stable power operation of the DC transmission system.

### Summary

An objective of the present invention is to provide a hybrid DC converter valve group online entry circuit for realizing series-parallel conversion of a voltage source converter and a current source converter by operating DC field switches, to provide a hybrid DC converter valve group online entry method for realizing online entry of the voltage source converter by adjusting the DC voltage and power and operating the DC field switches, and to provide a hybrid DC converter valve group online entry apparatus for controlling the valve group online entry circuit.

To achieve the foregoing objective, the present invention adopts the following technical solution: a hybrid DC converter valve group online entry circuit for online entering a voltage source converter of a hybrid DC converter, where if a voltage source-type valve group unit is a low-end valve group, the valve group online entry circuit at least includes a valve group connecting line switch of the voltage source-type valve group unit, a DC bus switch of the voltage source-type valve group unit, a bypass switch of the voltage source-type valve group unit, and a bypass switch of a current source-type valve group unit; and if the voltage source-type valve group unit is a high-end valve group, the valve group online entry circuit at least includes a valve group connecting line switch of the voltage source-type valve group unit, a neutral bus switch of the voltage source-type valve group unit, a bypass switch of the voltage source-type valve group unit, and a bypass switch of the current source-type valve group unit.

The valve group connecting line switch of the voltage source-type valve group unit is connected to a voltage source converter of the voltage source-type valve group unit and the current source-type valve group unit; the DC bus switch of the voltage source-type valve group unit is connected to the voltage source converter of the voltage source-type valve group unit and a DC bus; the bypass switch of the voltage source-type valve group unit is connected to a positive electrode and a negative electrode of the voltage source converter of the voltage source-type valve group unit; the bypass switch of the current source-type valve group unit is connected to an anode and a cathode of a line commutated converter of the current source-type valve group unit; and the neutral bus switch of the voltage source-type valve group unit is connected to the voltage source converter of the voltage source-type valve group unit and a neutral bus.

The hybrid HVDC transmission converter consists of the current source-type valve group unit and the voltage source-type valve group unit connected in series, and has four series connection topologies:
(1) a cathode of the current source-type valve group unit is connected to a negative electrode of the voltage source-type valve group unit; or
(2) an anode of the current source-type valve group unit is connected to a positive electrode of the voltage source-type valve group unit; or
(3) the cathode of the current source-type valve group unit is connected to the positive electrode of the voltage source-type valve group unit; or
(4) the anode of the current source-type valve group unit is connected to the negative electrode of the voltage source-type valve group unit;
the current source-type valve group unit adopts the line commutated converter, and the voltage source-type valve group unit adopts one voltage source converter or multiple voltage source converters connected in parallel.

If the voltage source-type valve group unit is the low-end valve group, the voltage source-type valve group unit is close to the neutral bus; and if the voltage source-type valve group unit is the high-end valve group, the voltage source-type valve group unit is close to the DC bus.

If the voltage source-type valve group unit is the low-end valve group, the DC bus switch of the voltage source-type valve group unit adopts a DC circuit breaker capable of breaking DC fault current, or a diode valve group capable of breaking DC fault current is connected in series between the DC bus switch and the voltage source converter of the voltage source-type valve group unit of the hybrid DC converter, and a cathode of the diode valve group and the positive electrode of the voltage source converter are common connection ends; and if the voltage source-type valve group unit is the high-end valve group, the neutral bus switch of the voltage source-type valve group unit adopts a DC circuit breaker capable of breaking DC fault current, or a diode valve group capable of breaking DC fault current is connected in series between the neutral bus switch and the voltage source converter of the voltage source-type valve group unit of the hybrid DC converter, and an anode of the diode valve group and the negative electrode of the voltage source converter are common connection ends.

The current source-type valve group unit adopts the line commutated converter, and includes the line commutated converter and a bypass switch assembly; the line commutated converter is connected in parallel to a bypass switch; and two ends of the current source-type valve group unit connected in parallel are respectively connected to one end of a disconnection switch, and the other end of the disconnection switch is connected in parallel to a bypass switch.

The voltage source-type valve group unit adopts the voltage source converter, and includes the voltage source converter, a current limiting reactor, a bypass thyristor valve group and a bypass switch assembly; the voltage source converter is connected in series to the current limiting reactor and then connected in parallel to the bypass thyristor valve group; two ends of the voltage source-type valve group unit connected in parallel are respectively connected to one end of the disconnection switch, and the other end of the disconnection switch is connected in parallel to the bypass switch. Optionally, the DC circuit breaker capable of breaking DC fault current is connected in series between the voltage source converter and the current limiting reactor in the voltage source-type valve group unit.

The line commutated converter is a six-pulse bridge circuit or a twelve-pulse bridge circuit, which consists of semi-controlled power semiconductors that cannot be turned off. The voltage source converter is any one or more of the following: a two-level converter, a diode-clamped multi-level converter, a Modular Multi-level Converter (MMC), a Hybrid Multi-level Converter (HMC), a Cascaded Two-Level Converter (CSL) or a Stacked Two-Level Converter (CTL), which consists of fully controlled power semiconductors that can be turned off. The semi-controlled power semiconductors that cannot be turned off are generally thyristors that cannot be turned off. The fully controlled power semiconductors that can be turned off are any one or more of the following: an Insulated Gate Bipolar Transistor (IGBT), an Integrated Gate Commutation Thyristor (IGCT), a Gate Turn-Off Thyristor (GTO), a Power Field Effect Transistor (Power MOSFET), an electron Injection Enhanced Gate Transistor (IEGT), a Gate Commutation Thyristor (GCT), or a Silicon Carbide Enhanced Junction Field Effect Transistor (SiC-JFET).

The present invention also provides a hybrid DC converter valve group online entry method applicable to the hybrid DC converter valve group online entry circuit, including: when only a line commutated converter is operating and a voltage source converter needs to be put into operation, connecting one end of the voltage source converter to a fixed potential; charging the voltage source converter; deblocking the voltage source converter; controlling the voltage of the voltage source converter to be the same as that of the line commutated converter; connecting the voltage source converter in parallel to two ends of the line commutated converter by means of parallel conversion of DC field switches; transferring DC power from the line commutated converter to the voltage source converter; blocking the line commutated converter; connecting the line commutated converter in series to the voltage source converter by means of series conversion of DC field switches; and online entering the line commutated converter.

The connection of one end of the voltage source converter to the fixed potential is realized by connecting a voltage source-type valve group unit to a neutral bus, and closing a neutral bus switch of the voltage source-type valve group unit.

The parallel conversion of the DC field switches is connecting the other end of the voltage source-type valve group unit to a DC bus, and it is realized by closing a DC bus switch of the voltage source-type valve group unit.

The series conversion of the DC field switches has two cases: (1) if the voltage source-type valve group unit is a low-end valve group, opening a bypass switch of the voltage source-type valve group unit, closing a bypass switch of a current source-type valve group unit, closing a valve group connecting line switch of the voltage source-type valve group unit, and opening the DC bus switch of the voltage source-type valve group unit; and (2) if the voltage source-type valve group unit is a high-end valve group, opening the bypass switch of the voltage source-type valve group unit, closing the bypass switch of the current source-type valve group unit, closing the valve group connecting line switch of the voltage source-type valve group unit, and opening the neutral bus switch of the voltage source-type valve group unit.

The online entry of the line commutated converter is realized by deblocking the line commutated converter, controlling DC current to transfer from the bypass switch to the line commutated converter, and opening the bypass switch to increase DC voltage.

The present invention also provides a hybrid DC converter valve group online entry apparatus applicable to the hybrid DC converter valve group online entry circuit, including a detection unit and a control unit, where:
the detection unit is configured to detect DC voltage, DC current, an deblocking signal, a blocking signal, and an operation signal of a voltage source-type valve group unit, detect DC voltage, DC current, an deblocking signal, a blocking signal, and an operation signal of a current source-type valve group unit, and detect the positions of switches of a DC field, the voltage source-type valve group unit and the current source-type valve group unit; and
the control unit is configured to connect, when receiving an operator's command of putting a voltage source converter into operation in the case that a line commutated converter has an deblocking signal and an operation signal and the voltage source converter has a blocking signal, one end of the voltage source converter to a fixed potential, charge the voltage source converter, deblock the voltage source converter, control the voltage of the voltage source converter to be the same as that of the line commutated converter, connect the voltage source converter in parallel to two ends of the line commutated converter by means of parallel conversion of DC field switches, transfer DC power from the line commutated converter to the voltage source converter, block the line commutated converter, connect the line commutated converter in series to the voltage source converter by means of series conversion of the DC field switches, and online enter the line commutated converter.

The connection of one end of the voltage source converter to the fixed potential is connecting the voltage source-type valve group unit to the neutral bus, and it is realized by closing the neutral bus switch of the voltage source-type valve group unit.

The parallel conversion of the DC field switches in the control unit is connecting the other end of the voltage source-type valve group unit to the DC bus, and it is realized by closing the DC bus switch of the voltage source-type valve group unit.

The series conversion of the DC field switches has two cases: (1) if the voltage source-type valve group unit is a low-end valve group, opening a bypass switch of the voltage source-type valve group unit, closing a bypass switch of a current source-type valve group unit, closing a valve group connecting line switch of the voltage source-type valve group unit, and opening the DC bus switch of the voltage source-type valve group unit; and (2) if the voltage source-type valve group unit is a high-end valve group, opening the bypass switch of the voltage source-type valve group unit, closing the bypass switch of the current source-type valve group unit, closing the valve group connecting line switch of the voltage source-type valve group unit, and opening the neutral bus switch of the voltage source-type valve group unit.

The online entry of the line commutated converter is realized by deblocking the line commutated converter, controlling DC current to transfer from the bypass switch to the line commutated converter, and opening the bypass switch to increase DC voltage.

The present invention has the beneficial effect: provided is a hybrid DC converter valve group online entry circuit, method, and apparatus. The online smooth entry of the voltage source converter is realized by connecting the voltage source converter in parallel to two ends of the line commutated converter, transferring the power of the line commutated converter to the voltage source converter, and then connecting the line commutated converter in series to the voltage source converter, and putting the line commutated converter into operation, so as to ensure the stable power operation of the HVDC transmission system.

### Brief Description of the Drawings

FIG. 1 shows four topologies in which a current source-type valve group unit is connected to a voltage source-type valve group unit;
FIG. 2 shows four typical topologies in which a current source-type valve group unit is connected to a voltage source-type valve group unit;
FIG. 3 shows an HVDC transmission apparatus consisting of four hybrid DC converter topologies, with a low-end valve group composed of voltage source converters;
FIG. 4 shows an HVDC transmission apparatus consisting of four hybrid DC converter topologies, with a high-end valve group composed of voltage source converters;
FIG. 5 shows an HVDC transmission apparatus consisting of a conventional line commutated converter at the rectifier side and two hybrid DC converters at the inverter side;
FIG. 6 shows a hybrid DC converter valve group online entry method according to the present invention; and
FIG. 7 shows a hybrid DC converter valve group online entry apparatus according to the present invention.

### Detailed Description

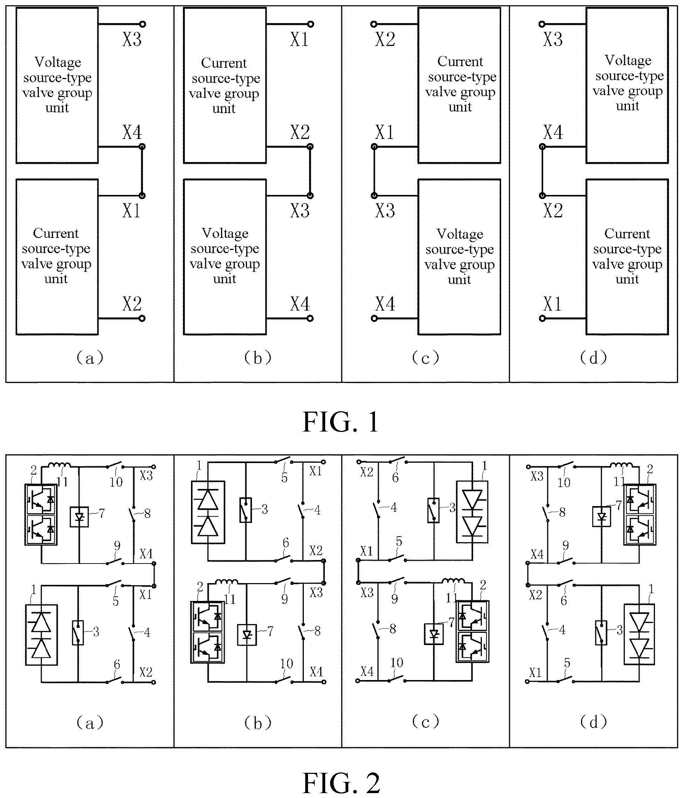

Embodiments of the present invention are described with reference to the following drawings, and the same components are numbered with the same reference numerals. FIG. 1 shows four topologies in which a current source-type valve group unit is connected to a voltage source-type valve group unit according to the present invention. FIG. 1(a) shows the topology in which a cathode X1 of the current source-type valve group unit is connected to a negative electrode X4 of the voltage source-type valve group unit. FIG. 1(b) shows the topology in which an anode X2 of the current source-type valve group unit is connected to a positive electrode X3 of the voltage source-type valve group unit. FIG. 1(c) shows the topology in which the cathode XI of the current source-type valve group unit is connected to the positive electrode X3 of the voltage source-type valve group unit. FIG. 1(d) shows the topology in which the anode X2 of the current source-type valve group unit is connected to the negative electrode X4 of the voltage source-type valve group unit.

FIG. 2 shows four topologies in which a preferred current source-type valve group unit is connected to a voltage source-type valve group unit according to the present invention. FIG. 2(a) shows the topology in which a cathode of the preferred current source-type valve group unit is connected to a negative electrode of the voltage source-type valve group unit. FIG. 2(b) shows the topology in which an anode of the preferred current source-type valve group unit is connected to a positive electrode of the voltage source-type valve group unit. FIG. 2(c) shows the topology in which the cathode of the preferred current source-type valve group unit is connected to the positive electrode of the voltage source-type valve group unit. FIG. 2(d) shows the topology in which the anode of the preferred current source-type valve group unit is connected to the negative electrode of the voltage source-type valve group unit. The current source-type valve group unit includes a line commutated converter 1 and a bypass switch assembly. The line commutated converter 1 is connected in parallel to the bypass switch 3. Two ends of the current source-type valve group unit connected in parallel are respectively connected to one end of a disconnection switch 5, 6, and the other end of the disconnection switch 5, 6 is connected in parallel to a bypass switch 4. The voltage source-type valve group unit includes a voltage source converter 2 and a bypass switch assembly. The voltage source converter 2 is connected in series to a current limiting reactor 11 and then connected in parallel to a bypass power electronic switch 7. Two ends of the voltage source-type valve group unit connected in parallel are respectively connected to one end of a valve group connecting line switch 9 and one end of a bus switch 10, and the other end of the valve group connecting line switch 9 and the other end of the bus switch 10 are connected in parallel to a bypass switch 8. In order to match the capacity of the line commutated converter 1, the voltage source converter 2 is a converter or a plurality of converters connected in parallel. Optionally, in order to better suppress the DC fault current, a DC circuit breaker capable of breaking DC fault current is added between the voltage source converter 2 and the current limiting reactor 11.

### Embodiment 1:

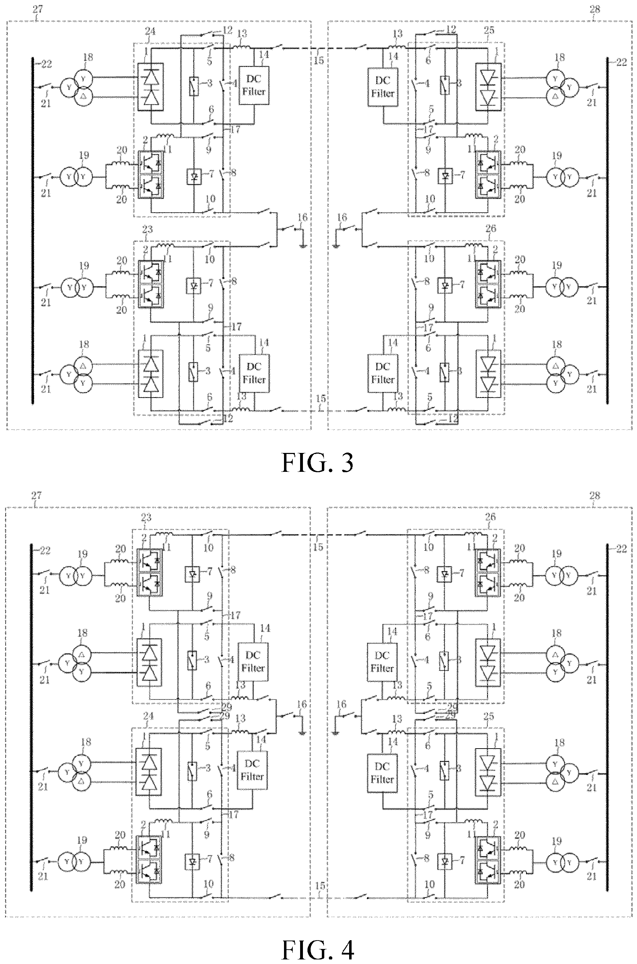

FIG. 3 shows an embodiment in which the HVDC transmission apparatus consists of the four topologies shown in FIG. 2, with the low-end valve group composed of voltage source converters, where a rectifier station 27 is connected to an inverter station 28 by means of a DC line 15. A negative converter and a positive converter of the rectifier station 27 are respectively formed by the topologies (1)23 and (2)24 in FIG. 2, and a positive converter and a negative converter of the inverter station 28 are respectively formed by the topologies (3)25 and (4)26. A valve group 1 includes a line commutated converter, which is connected to a secondary winding of a thyristor-based current source-type HVDC transmission transformer 18. A valve group 2 includes a voltage source converter, which is connected to a secondary winding of a VSC-HVDC transmission transformer 19. It should be pointed out that an AC power grid is three-phase. However, only one phase is shown in FIG. 3 for clarity. A primary winding of the HVDC transmission transformer is connected to and disconnected from the AC power grid 22 by means of an AC switch 21. If the voltage source converter 2 provides reactive power to the current source converter 1, an AC filter is less configured or not configured. In order to suppress the circulating current of the bridge arm of the voltage source converter and the surge current under the fault, a bridge arm reactor 20 is provided. In order to smooth the DC voltage of the DC circuit and suppress the DC fault current, a smoothing reactor 13 and the current limiting reactor 11 are provided. FIG. 3 shows a ground electrode lead 16, configured to connect a converter to a ground electrode. A DC filter 14 is disposed between the DC line 15 and a valve block connecting line 17. The valve group connecting line switch 9 is close to the voltage source converter 2, and the DC bus switch 12 is bridged between the valve group connecting line switch 9 and the DC bus.

The hybrid DC converter valve group online entry circuit is used for online entering the voltage source converter 2. The voltage source-type valve group unit in FIG. 3 is a low-end valve group, and the valve group online entry circuit at least includes a valve group connecting line switch 9 of the voltage source-type valve group unit, a DC bus switch 12 of the voltage source-type valve group unit, a bypass switch 8 of the voltage source-type valve group unit, and a bypass switch 4 of a current source-type valve group unit.

When only the line commutated converter 1 is operating, the disconnection switches 5 and 6 of the current source-type valve group unit are in the closed position, and the bypass switch 3 and the bypass switch 4 are in the open position; the valve group connecting line switch 9, the bus switch 10, and the DC bus switch 12 of the voltage source-type valve group unit are in the open position, the bypass power electronic switch 7 is in the turn-off state, and the bypass switch 8 is in the closed position. When the voltage source converter 2 needs to be put into operation, the bus switch 10 is closed, the voltage source converter 2 is charged, the voltage source converter 2 is deblocked, the voltage of the voltage source converter 2 is controlled to be the same as that of the line commutated converter 1, the DC bus switch 12 is closed, the voltage source converter 2 is connected in parallel to two ends of the line commutated converter 1, the DC power is transferred from the line commutated converter 1 to the voltage source converter 2, and the line commutated converter 1 is blocked, and in this case, the operating power of the voltage source converter 2 is equal to the preceding operating power of the line commutated converter 1, the bypass switch 8 is open, the bypass switch 3 or the bypass switch 4 is closed, the valve group connecting line switch 9 is closed, and the DC bus switch 12 is open. The rectifier station 27 and the inverter station 28 can respectively carry out the foregoing operations to realize the power transfer from the line commutated converter 1 to the voltage source converter 2. When the line commutated converters 1 of the rectifier station 27 and the inverter station 28 are all set, the line commutated converter 1 is deblocked, the DC current is controlled to transfer from the bypass switch 3 or the bypass switch 4 to the line commutated converter 1, the bypass switch 3 or the bypass switch 4 is open to control the trigger angle of the line commutated converter 1 and increase DC voltage to realize the online entry of the line commutated converter 1, and so far, the line commutated converter 1 and the voltage source converter 2 operate in series.

In order to prevent the DC transmission system from being blocked due to the fault in the DC line or the AC line during the parallel connection of the voltage source converter 2 to the line commutated converter 1, optionally, a DC circuit breaker capable of breaking DC fault current is added between the voltage source converter 2 and the current limiting reactor 11, or the DC bus switch 12 adopts a DC circuit breaker capable of breaking DC fault current, or a diode valve group capable of breaking the reverse current of the voltage source converter 2 is connected in series between the DC bus switch 12 of the hybrid DC converter at the inverter side and the voltage source converter 2, and a cathode of the diode valve group and a positive electrode of the voltage source converter are common connection ends. It should be noted that the reverse current of the voltage source converter 2 in the hybrid DC converter at the inverter side flows from the negative electrode to the positive electrode of the voltage source converter 2.

### Embodiment 2:

FIG. 4 shows an embodiment in which the HVDC transmission apparatus consists of the four topologies shown in FIG. 2, with the high-end valve group composed of voltage source converters, where a rectifier station 27 is connected to a inverter station 28 by means of a DC line 15. A positive converter and a negative converter of the rectifier station 27 are respectively formed by the topologies (1)23 and (2)24 in FIG. 2, and a negative converter and a positive converter of the inverter station 28 are respectively formed by the topologies (3)25 and (4)26. A valve group 1 is a line commutated converter, which is connected to a secondary winding of a thyristor-based current source-type HVDC transmission transformer 18. A valve group 2 is a voltage source converter, which is connected to a secondary winding of a VSC-HVDC transmission transformer 19. A primary winding of the HVDC transmission transformer is connected to and disconnected from the AC power grid 22 by means of an AC switch 21. If the voltage source converter 2 provides reactive power to the current source converter 1, an AC filter is less configured or not configured. In order to suppress the circulating current of the bridge arm of the voltage source converter and the surge current under the fault, a bridge arm reactor 20 is provided. In order to smooth the DC voltage of the DC circuit and suppress the DC fault current, a smoothing reactor 13 and the current limiting reactor 11 are provided. FIG. 4 shows a ground electrode lead 16, configured to connect a converter to a ground electrode. A DC filter 14 is disposed between the DC line 16 and a valve block connecting line 17. The valve group connecting line switch 9 is close to the voltage source converter 2, and the neutral bus switch 29 is bridged between the valve group connecting line switch 9 and the neutral bus.

The hybrid DC converter valve group online entry circuit is used for online entering the voltage source converter 2. The voltage source-type valve group unit in FIG. 4 is a high-end valve group, and the valve group online entry circuit at least includes a valve group connecting line switch 9 of the voltage source-type valve group unit, a neutral bus switch 29 of the voltage source-type valve group unit, a bypass switch 8 of the voltage source-type valve group unit, and a bypass switch 4 of a current source-type valve group unit.

When only the line commutated converter 1 is operating, the disconnection switches 5 and 6 of the current source-type valve group unit are in the closed position, and the bypass switch 3 and the bypass switch 4 are in the open position; the valve group connecting line switch 9, the disconnection switch 10, and the neutral bus switch 29 of the voltage source-type valve group unit are in the open position, the bypass power electronic switch 7 is in the turn-off state, and the bypass switch 8 is in the closed position. When the voltage source converter 2 needs to be put into operation, the neutral bus switch 29 is closed, the voltage source converter 2 is charged, the voltage source converter 2 is deblocked, the voltage of the voltage source converter 2 is controlled to be the same as that of the line commutated converter 1, the bus switch 10 is closed, the voltage source converter 2 is connected in parallel to two ends of the line commutated converter 1, the DC power is transferred from the line commutated converter 1 to the voltage source converter 2, and the line commutated converter 1 is blocked, and in this case, the operating power of the voltage source converter 2 is equal to the preceding operating power of the line commutated converter 1, the bypass switch 8 is open, the bypass switch 3 or the bypass switch 4 is closed, the valve group connecting line switch 9 is closed, and the neutral bus switch 29 is open. The rectifier station 27 and the inverter station 28 can respectively carry out the foregoing operations to realize the power transfer from the line commutated converter 1 to the voltage source converter 2. When the line commutated converters 1 of the rectifier station 27 and the inverter station 28 are all set, the line commutated converter 1 is deblocked, the DC current is controlled to transfer from the bypass switch 3 or the bypass switch 4 to the line commutated converter 1, the bypass switch 3 or the bypass switch 4 is open to control the trigger angle of the line commutated converter 1 and increase DC voltage to realize the online entry of the line commutated converter 1, and so far, the line commutated converter 1 and the voltage source converter 2 operate in series.

In order to prevent the DC transmission system from being blocked due to the fault in the DC line or the AC line during the parallel connection of the voltage source converter 2 to the line commutated converter 1, optionally, a DC circuit breaker capable of breaking DC fault current is added between the voltage source converter 2 and the current limiting reactor 11, or the neutral bus switch 29 adopts a DC circuit breaker capable of breaking DC fault current, or a diode valve group capable of breaking the reverse current of the voltage source converter 2 is connected in series between the neutral bus switch 29 of the hybrid DC converter at the inverter side and the voltage source converter 2, and an anode of the diode valve group and a negative electrode of the voltage source converter are common connection ends.

### Embodiment 3:

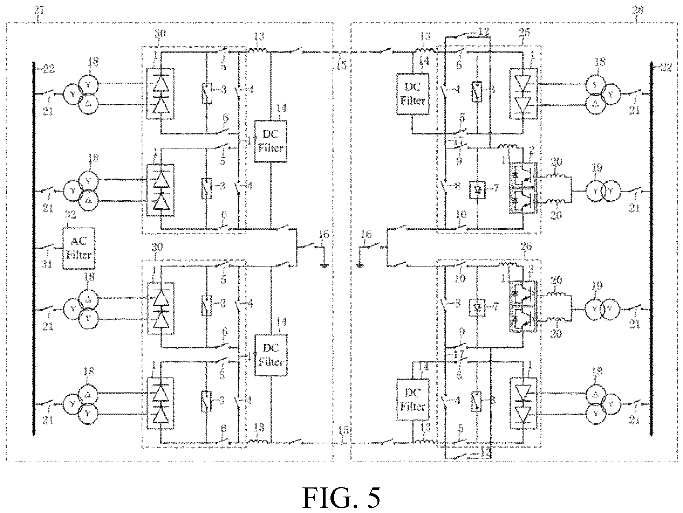

FIG. 5 shows an embodiment in which an HVDC transmission apparatus consists of a converter composed of conventional current source-type valve groups and two topologies shown in FIG. 2. The rectifier station 27 of the HVDC transmission apparatus is composed of a topology 30 with current source-type valve group units connected in series, and a positive converter and a negative converter of the inverter station 28 are respectively formed by topologies (3)25 and (4)26. A valve group 1 is a line commutated converter, which is connected to a secondary winding of a thyristor-based current source-type HVDC transmission transformer 18. A valve group 2 is a voltage source converter, which is connected to a secondary winding of a VSC-HVDC transmission transformer 19. The rectifier station 27 is configured with an AC filter 32 to filter out harmonics and provide reactive power, and is connected to and disconnected from the AC power grid 22 by means of an AC switch 31. In order to suppress the circulating current of the bridge arm of the voltage source converter and the surge current under the fault, a bridge arm reactor 20 is provided. In order to smooth the DC voltage of the DC circuit and suppress the DC fault current, a smoothing reactor 13 and the current limiting reactor 11 are provided. FIG. 5 shows a ground electrode lead 16, configured to connect a converter to a ground electrode. The rectifier station 27 is configured with a DC filter 14 between the DC line 15 and the ground electrode lead 16. The inverter station 28 is configured with a DC filter 14 between the valve group connecting line 17 and the ground electrode lead 16. The valve group connecting line switch 9 of the inverter station is close to the voltage source converter 2, and the DC bus switch 12 is bridged between the valve group connecting line switch 9 and the DC bus.

The hybrid DC converter valve group online entry circuit is used for online entering the voltage source converter 2. The voltage source-type valve group unit in FIG. 5 is a low-end valve group, and the valve group online entry circuit at least includes a valve group connecting line switch 9 of the voltage source-type valve group unit, a DC bus switch 12 of the voltage source-type valve group unit, a bypass switch 8 of the voltage source-type valve group unit, and a bypass switch 4 of a current source-type valve group unit.

When only the line commutated converter 1 is operating, the disconnection switches 5 and 6 of the current source-type valve group unit are in the closed position, and the bypass switch 3 and the bypass switch 4 are in the open position; the valve group connecting line switch 9, the bus switch 10, and the DC bus switch 12 of the voltage source-type valve group unit are in the open position, the bypass power electronic switch 7 is in the turn-off state, and the bypass switch 8 is in the closed position. When the voltage source converter 2 needs to be put into operation, the disconnection switch 10 is closed, the voltage source converter 2 is charged, the voltage source converter 2 is deblocked, the voltage of the voltage source converter 2 is controlled to be the same as that of the line commutated converter 1, the DC bus switch 12 is closed, the voltage source converter 2 is connected in parallel to two ends of the line commutated converter 1, the DC power is transferred from the line commutated converter 1 to the voltage source converter 2, and the line commutated converter 1 is blocked, and in this case, the operating power of the voltage source converter 2 is equal to the preceding operating power of the line commutated converter 1, the bypass switch 8 is open, the bypass switch 3 or the bypass switch 4 is closed, the valve group connecting line switch 9 is closed, and the DC bus switch 12 is open. The inverter station 28 can carry out the foregoing operations to realize the power transfer from the line commutated converter 1 to the voltage source converter 2. When the line commutated converters 1 of the rectifier station 27 and the inverter station 28 are all set, the line commutated converter 1 is deblocked, the DC current is controlled to transfer from the bypass switch 3 or the bypass switch 4 to the line commutated converter 1, the bypass switch 3 or the bypass switch 4 is open to control the trigger angle of the line commutated converter 1 and increase DC voltage to realize the online entry of the line commutated converter 1, and so far, the line commutated converter 1 and the voltage source converter 2 operate in series.

In order to prevent the DC transmission system from being blocked due to the fault in the DC line or the AC line during the parallel connection of the voltage source converter 2 to the line commutated converter 1, optionally, a DC circuit breaker capable of breaking DC fault current is added between the voltage source converter 2 and the current limiting reactor 11, or the DC bus switch 12 adopts a DC circuit breaker capable of breaking DC fault current, or a diode valve group capable of breaking the reverse current of the voltage source converter 2 is connected in series between the DC bus switch 12 of the hybrid DC converter at the inverter side and the voltage source converter 2, and a cathode of the diode valve group and a positive electrode of the voltage source converter are common connection ends.

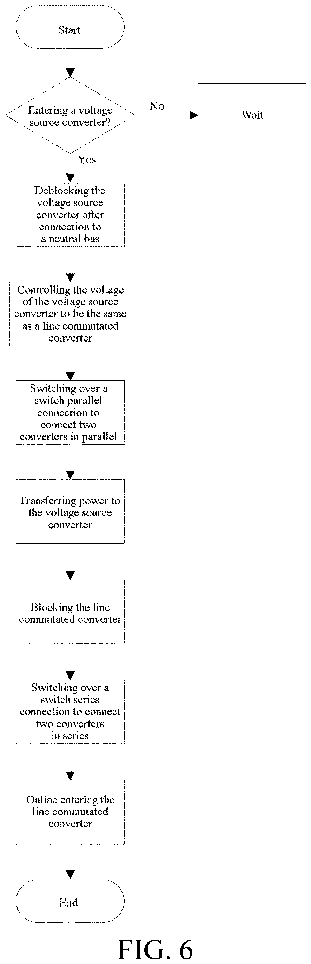

FIG. 6 shows a hybrid DC converter valve group online entry method, including: when only the line commutated converter is operating, and a command of putting the voltage source converter into operation is received, connecting one end of the voltage source converter to a fixed potential; charging the voltage source converter; deblocking the voltage source converter; controlling the voltage of the voltage source converter to be the same as that of the line commutated converter; connecting the voltage source converter in parallel to two ends of the line commutated converter by means of parallel conversion of DC field switches; transferring DC power from the line commutated converter to the voltage source converter; blocking the line commutated converter; connecting the line commutated converter in series to the voltage source converter by means of series conversion of the DC field switches; and online entering the line commutated converter.

The connection of one end of the voltage source converter to the fixed potential is realized by connecting a voltage source-type valve group unit to a neutral bus, and closing a neutral bus switch of the voltage source-type valve group unit.

The parallel conversion of the DC field switches is realized by connecting the other end of the voltage source-type valve group unit to a DC bus, and closing a DC bus switch of the voltage source-type valve group unit.

The series conversion of the DC field switches has two cases: (1) if the voltage source-type valve group unit is a low-end valve group, opening a bypass switch of the voltage source-type valve group unit, closing a bypass switch of a current source-type valve group unit, closing a valve group connecting line switch of the voltage source-type valve group unit, and opening the DC bus switch of the voltage source-type valve group unit; and (2) if the voltage source-type valve group unit is a high-end valve group, opening the bypass switch of the voltage source-type valve group unit, closing the bypass switch of the current source-type valve group unit, closing the valve group connecting line switch of the voltage source-type valve group unit, and opening the neutral bus switch of the voltage source-type valve group unit.

The online entry of the line commutated converter is realized by deblocking the line commutated converter, controlling DC current to transfer from the bypass switch to the line commutated converter, and opening the bypass switch to increase DC voltage.

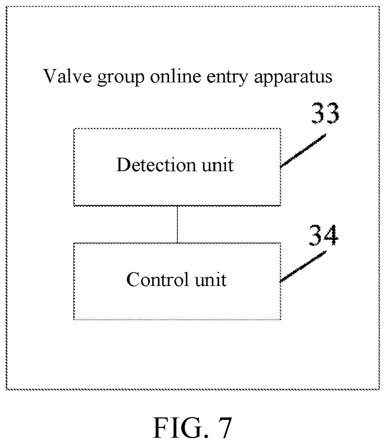

FIG. 7 shows a hybrid DC converter valve group online entry apparatus for realizing online entry of a hybrid DC converter valve group, including:
a detection unit 33, configured to detect DC voltage, DC current, an deblocking signal, a blocking signal, and an operation signal of a voltage source-type valve group unit, detect DC voltage, DC current, an deblocking signal, a blocking signal, and an operation signal of a current source-type valve group unit, and detect the positions of switches of a DC field, the voltage source-type valve group unit and the current source-type valve group unit; and
a control unit 34, configured to connect, when receiving an operator's command of putting a voltage source converter into operation in the case that a line commutated converter has an deblocking signal and an operation signal and the voltage source converter has a blocking signal, one end of the voltage source converter to a fixed potential, charge the voltage source converter, deblock the voltage source converter, control the voltage of the voltage source converter to be the same as that of the line commutated converter, connect the voltage source converter in parallel to two ends of the line commutated converter by means of parallel conversion of DC field switches, transfer DC power from the line commutated converter to the voltage source converter, block the line commutated converter, connect the line commutated converter in series to the voltage source converter by means of series conversion of the DC field switches, and online enter the line commutated converter.

The connection of one end of the voltage source converter to the fixed potential in the control unit is realized by connecting the voltage source-type valve group unit to a neutral bus, and closing a neutral bus switch of the voltage source-type valve group unit.

The parallel conversion of the DC field switches in the control unit is realized by connecting the other end of the voltage source-type valve group unit to a DC bus, and closing a DC bus switch of the voltage source-type valve group unit.

The series conversion of the DC field switches in the control unit has two cases: (1) if the voltage source-type valve group unit is a low-end valve group, opening a bypass switch of the voltage source-type valve group unit, closing a bypass switch of a current source-type valve group unit, closing a valve group connecting line switch of the voltage source-type valve group unit, and opening the DC bus switch of the voltage source-type valve group unit; and (2) if the voltage source-type valve group unit is a high-end valve group, opening the bypass switch of the voltage source-type valve group unit, closing the bypass switch of the current source-type valve group unit, closing the valve group connecting line switch of the voltage source-type valve group unit, and opening the neutral bus switch of the voltage source-type valve group unit.

The online entry of the line commutated converter in the control unit is realized by deblocking the line commutated converter, controlling DC current to transfer from the bypass switch to the line commutated converter, and opening the bypass switch to increase DC voltage.

The valve group online entry circuit and method proposed in the present invention are used for online entry of a voltage source converter of a hybrid DC converter, and are particularly suitable for a voltage source converter with a narrow DC voltage adjustment range or incapable of adjusting the DC voltage to zero.

The foregoing embodiments are for only describing the technical idea of the present invention, and are not intended to limit the scope of protection of the preset invention. Any modification made based on the technical solutions according to the technical idea of the present invention shall fall within the scope of protection of the present invention.

## Claims

1. A hybrid DC converter valve group online entry circuit for online entering a voltage source converter of a hybrid DC converter, wherein if a voltage source-type valve group unit is a low-end valve group, the valve group online entry circuit at least comprises a valve group connecting line switch of the voltage source-type valve group unit, a DC bus switch of the voltage source-type valve group unit, a bypass switch of the voltage source-type valve group unit, and a bypass switch of a current source-type valve group unit; and if the voltage source-type valve group unit is a high-end valve group, the valve group online entry circuit at least comprises a valve group connecting line switch of the voltage source-type valve group unit, a neutral bus switch of the voltage source-type valve group unit, a bypass switch of the voltage source-type valve group unit, and a bypass switch of the current source-type valve group unit;
the valve group connecting line switch of the voltage source-type valve group unit is connected to a voltage source converter of the voltage source-type valve group unit and the current source-type valve group unit; the DC bus switch of the voltage source-type valve group unit is connected to the voltage source converter of the voltage source-type valve group unit and a DC bus; the bypass switch of the voltage source-type valve group unit is connected to a positive electrode and a negative electrode of the voltage source converter of the voltage source-type valve group unit; the bypass switch of the current source-type valve group unit is connected to an anode and a cathode of a line commutated converter of the current source-type valve group unit; and the neutral bus switch of the voltage source-type valve group unit is connected to the voltage source converter of the voltage source-type valve group unit and a neutral bus.

2. The hybrid DC converter valve group online entry circuit according to claim 1, wherein the hybrid HVDC transmission converter consists of the current source-type valve group unit and the voltage source-type valve group unit connected in series, and has four series connection topologies:
(1) a cathode of the current source-type valve group unit is connected to a negative electrode of the voltage source-type valve group unit; or
(2) an anode of the current source-type valve group unit is connected to a positive electrode of the voltage source-type valve group unit; or
(3) the cathode of the current source-type valve group unit is connected to the positive electrode of the voltage source-type valve group unit; or
(4) the anode of the current source-type valve group unit is connected to the negative electrode of the voltage source-type valve group unit;
the current source-type valve group unit adopts the line commutated converter, and the voltage source-type valve group unit adopts one voltage source converter or multiple voltage source converters connected in parallel.

3. The hybrid DC converter valve group online entry circuit according to claim 1, wherein if the voltage source-type valve group unit is the low-end valve group, the voltage source-type valve group unit is close to the neutral bus; and if the voltage source-type valve group unit is the high-end valve group, the voltage source-type valve group unit is close to the DC bus.

4. The hybrid DC converter valve group online entry circuit according to claim 1, wherein if the voltage source-type valve group unit is the low-end valve group, the DC bus switch of the voltage source-type valve group unit adopts a DC circuit breaker capable of breaking DC fault current, or a diode valve group capable of breaking DC fault current is connected in series between the DC bus switch and the voltage source converter of the voltage source-type valve group unit of the hybrid DC converter, and a cathode of the diode valve group and the positive electrode of the voltage source converter are common connection ends; and if the voltage source-type valve group unit is the high-end valve group, the neutral bus switch of the voltage source-type valve group unit adopts a DC circuit breaker capable of breaking DC fault current, or a diode valve group capable of breaking DC fault current is connected in series between the neutral bus switch and the voltage source converter of the voltage source-type valve group unit of the hybrid DC converter, and an anode of the diode valve group and the negative electrode of the voltage source converter are common connection ends.

5. The hybrid DC converter valve group online entry circuit according to claim 2, wherein the current source-type valve group unit adopts the line commutated converter, and comprises the line commutated converter and a bypass switch assembly; the line commutated converter is connected in parallel to a bypass switch; and two ends of the current source-type valve group unit connected in parallel are respectively connected to one end of a disconnection switch, and the other end of the disconnection switch is connected in parallel to a bypass switch.

6. The hybrid DC converter valve group online entry circuit according to claim 2, wherein the voltage source-type valve group unit adopts the voltage source converter, and comprises the voltage source converter, a current limiting reactor, a bypass thyristor valve group and a bypass switch assembly; the voltage source converter is connected in series to the current limiting reactor and then connected in parallel to the bypass thyristor valve group; two ends of the voltage source-type valve group unit connected in parallel are respectively connected to one end of the disconnection switch, and the other end of the disconnection switch is connected in parallel to the bypass switch.

7. The hybrid DC converter valve group online entry circuit according to claim 2, wherein the line commutated converter is a six-pulse bridge circuit or a twelve-pulse bridge circuit, which consists of semi-controlled power semiconductors that cannot be turned off.

8. The hybrid DC converter valve group online entry circuit according to claim 2, wherein the voltage source converter is any one or more of the following: a two-level converter, a diode-clamped multi-level converter, a Modular Multi-level Converter (MMC), a Hybrid Multi-level Converter (HMC), a Cascaded Two-Level Converter (CSL) or a Stacked Two-Level Converter (CTL), which consists of fully controlled power semiconductors that can be turned off.

9. A hybrid DC converter valve group online entry method applicable to the hybrid DC converter valve group online entry circuit according to any one of claims 1 to 8, comprising:
when only a line commutated converter is operating and a voltage source converter needs to be put into operation, connecting one end of the voltage source converter to a fixed potential; charging the voltage source converter; deblocking the voltage source converter; controlling the voltage of the voltage source converter to be the same as that of the line commutated converter; connecting the voltage source converter in parallel to two ends of the line commutated converter by means of parallel conversion of DC field switches; transferring DC power from the line commutated converter to the voltage source converter; blocking the line commutated converter; connecting the line commutated converter in series to the voltage source converter by means of series conversion of the DC field switches; and online entering the line commutated converter.

10. The hybrid DC converter valve group online entry method according to claim 9, wherein the connection of one end of the voltage source converter to the fixed potential is realized by connecting a voltage source-type valve group unit to a neutral bus, and closing a neutral bus switch of the voltage source-type valve group unit.

11. The hybrid DC converter valve group online entry method according to claim 9, wherein the parallel conversion of the DC field switches is realized by connecting the other end of the voltage source-type valve group unit to a DC bus, and closing a DC bus switch of the voltage source-type valve group unit.

12. The hybrid DC converter valve group online entry method according to claim 9, wherein the series conversion of the DC field switches has two cases: (1) if the voltage source-type valve group unit is a low-end valve group, opening a bypass switch of the voltage source-type valve group unit, closing a bypass switch of a current source-type valve group unit, closing a valve group connecting line switch of the voltage source-type valve group unit, and opening the DC bus switch of the voltage source-type valve group unit; and (2) if the voltage source-type valve group unit is a high-end valve group, opening the bypass switch of the voltage source-type valve group unit, closing the bypass switch of the current source-type valve group unit, closing the valve group connecting line switch of the voltage source-type valve group unit, and opening the neutral bus switch of the voltage source-type valve group unit.

13. The hybrid DC converter valve group online entry method according to claim 9, wherein the online entry of the line commutated converter is realized by deblocking the line commutated converter, controlling DC current to transfer from the bypass switch to the line commutated converter, and opening the bypass switch to increase DC voltage.

14. A hybrid DC converter valve group online entry apparatus applicable to the hybrid DC converter valve group online entry circuit according to any one of claims 1 to 8, comprising a detection unit and a control unit, wherein:
the detection unit is configured to detect DC voltage, DC current, an deblocking signal, a blocking signal, and an operation signal of a voltage source-type valve group unit, detect DC voltage, DC current, an deblocking signal, a blocking signal, and an operation signal of a current source-type valve group unit, and detect the positions of switches of a DC field, the voltage source-type valve group unit and the current source-type valve group unit; and
the control unit is configured to connect, when receiving an operator's command of putting a voltage source converter into operation in the case that a line commutated converter has an deblocking signal and an operation signal and the voltage source converter has a blocking signal, one end of the voltage source converter to a fixed potential, charge the voltage source converter, deblock the voltage source converter, control the voltage of the voltage source converter to be the same as that of the line commutated converter, connect the voltage source converter in parallel to two ends of the line commutated converter by means of parallel conversion of DC field switches, transfer DC power from the line commutated converter to the voltage source converter, block the line commutated converter, connect the line commutated converter in series to the voltage source converter by means of series conversion of the DC field switches, and online enter the line commutated converter.

15. The hybrid DC converter valve group online entry apparatus according to claim 14, wherein the connection of one end of the voltage source converter to the fixed potential in the control unit is realized by connecting the voltage source-type valve group unit to a neutral bus, and closing a neutral bus switch of the voltage source-type valve group unit.

16. The hybrid DC converter valve group online entry apparatus according to claim 14, wherein the parallel conversion of the DC field switches in the control unit is realized by connecting the other end of the voltage source-type valve group unit to a DC bus, and closing a DC bus switch of the voltage source-type valve group unit.

17. The hybrid DC converter valve group online entry apparatus according to claim 14, wherein the series conversion of the DC field switches in the control unit has two cases: (1) if the voltage source-type valve group unit is a low-end valve group, opening a bypass switch of the voltage source-type valve group unit, closing a bypass switch of a current source-type valve group unit, closing a valve group connecting line switch of the voltage source-type valve group unit, and opening the DC bus switch of the voltage source-type valve group unit; and (2) if the voltage source-type valve group unit is a high-end valve group, opening the bypass switch of the voltage source-type valve group unit, closing the bypass switch of the current source-type valve group unit, closing the valve group connecting line switch of the voltage source-type valve group unit, and opening the neutral bus switch of the voltage source-type valve group unit.

18. The hybrid DC converter valve group online entry apparatus according to claim 14, wherein the online entry of the line commutated converter is realized by deblocking the line commutated converter, controlling DC current to transfer from the bypass switch to the line commutated converter, and opening the bypass switch to increase DC voltage.
